# EUROPÄISCHE PATENTSCHRIFT

(11) **EP 2 292 562 B1**
(45) Veröffentlichungstag und Bekanntmachung des Hinweises auf die Patenterteilung: **24.09.2014**
(21) Anmeldenummer: 10171700.7
(22) Anmeldetag: 03.08.2010
(51) Int. Cl.: C02F 1/44, C02F 1/00, B01D 63/04, B01D 65/02, B01D 61/14, B01D 61/22

(54) **Verfahren und Anlage zum Filtrieren von Wasser, insbesondere Ultrafiltrationsverfahren**
Method and assembly for filtering water, in particular ultrafiltration method
Procédé et installation de filtration d'eau, notamment procédé d'ultrafiltration

(30) Priorität: 04.09.2009 DE 102009040142
(43) Veröffentlichungstag der Anmeldung: 09.03.2011
(73) Patentinhaber: Krones AG, 93073 Neutraubling (DE)
(72) Erfinder: Scheu, Dirk, 73441 Bopfingen (DE)
(74) Vertreter: Grünecker, Kinkeldey, Stockmair & Schwanhäusser

(56) Entgegenhaltungen:
- EP-A1- 2 158 958
- WO-A2-2008/096108
- DE-A1-102005 033 314
- JP-A- 2002 346 348
- US-A- 4 708 790
- US-A- 6 001 254
- US-A1- 2005 224 412
- US-A1- 2008 257 824

## Beschreibung

Die Erfindung bezieht sich auf ein Verfahren und eine Filteranlage zum Filtrieren von Wasser, insbesondere Ultrafiltrationsverfahren.

Ultrafiltrationsanlagen werden gegenwärtig in unterschiedlichen Ausprägungen gebaut, das Verfahren läuft jedoch häufig ähnlich ab, d.h. das erzeugte Filtrat (weitestgehend keim-, bakterien-und virenfrei) wird in einen Stapeltank/Zwischenbehälter aufgefangen und von dort aus zum Verbraucher gepumpt. Auch das für die Rückspülung sowie die CIP-Reinigung (cleaning-inplace) der Ultrafiltrationsmodule benötigte Wasser wird dort entnommen. Diese Betriebsweise birgt zum einen die Gefahr, dass beim CIPen über die eingesetzten Chemikalien ungelöste Bestandteile auf die Filtratseite der Ultrafiltration gelangen können. Zum anderen können bei diesem Vorgang der Rückspülung aus dem Filtrattank selbst mikrobiologische Verunreinigungen über das Filtrat auf die Filtratseite gelangen. Das Entfernen dieser Kontaminationen ist speziell beim sogenannten In-Out-Verfahren bei Hohlfaser-Filtrationsmodulen (Filtrationsbetrieb von innen nach außen) problematisch. Ein weiterer Nachteil besteht darin, dass während der Rückspülung kein Filtrat produziert werden kann, da die gleiche Leitung Verwendung findet.

Aus der WO 2008/096108 ist ein Filtrationssystem bekannt, bei dem die Filtrationsmodule für jeweils eine zweistufige Filtration ausgelegt sind, wobei das die erste Stufe verlassende Permeat als Rohwasser in die zweite Stufe gelangt. Es sind Vorkehrungen zum Rückspülen mit Permeat (Filtrat) vorgesehen, die jedoch nur für die erste Stufe geeignet sind. Zum Rückspülen sind die Filtrationsmodule untereinander direkt mit einer Filtratleitung verbunden, durch die das die erste Stufe eines der Module verlassende Filtrat in ein benachbartes Modul, und dort auf die Filtratseite, gelangt, und dadurch zum Rückspülen eingesetzt wird. Das Rückspülen wird eingeleitet, in dem die Rohwasserzufuhr zur zu reinigenden Modulstufe abgesperrt und eine Strömungsverbindung in einen Reinigungsmittelkreislauf geöffnet wird, wobei der Reinigungsmittelkreislauf über ein Ventil in den Ablauf geöffnet werden kann. Während des Rückspülvorgangs einer der Modulstufen arbeiten die restlichen, nicht zu reinigenden ersten und alle zweiten Filtrationsstufen weiter. Während des Rückspülens wird die Rohwasserzufuhr erhöht, um die gewünschte Filtratmenge aufrechtzuerhalten. Wie dies geschieht, wird nicht beschrieben.

Die US-A-6 001 254 beschreibt eine Filtrationsanlage mit einer Mehrzahl von rückspülbaren Filtermodulen, wobei zum Rückspülen eines der Module das Permeat (Filtrat) verwendet wird, das die anderen Module produzieren. Zum Rückspülen wird das zentrale Auslassventil für Filtrat geschlossen, wodurch kein Permeat (Filtrat) mehr abgegeben werden kann, die Produktion wird demzufolge vollständig gestoppt.

Die nicht vorveröffentlichte EP-A-2 158 958 betrifft eine Einrichtung und ein Verfahren zum Rückspülen von Filtermembranmodulen, bei der das Rückspülen mit Filtrat erfolgt, das durch gerade nicht rückgespülte, weiterarbeitende Filtermodule erzeugt wird. Das zum Rückspülen verwendete Filtrat wird nicht durch Erhöhung des Durchsatzes durch die anderen Filtrationsmodule ausgeglichen.

Aus der EP 899 238 ist eine mehrstufige Filtrationsanlage bekannt, bei der die zweite Stufe mit dem in der ersten Stufe erzeugten Permeat rückgespült werden kann. Dieses Verfahren funktioniert jedoch nur dort, wo verschiedene Stufen vorgesehen sind, die nacheinander durchlaufen werden. Auch ist es nicht möglich, die erste Stufe mit Permeat zu spülen, das nicht zuvor erst in einem Tank gelagert wurde.

Der Erfindung liegt die Aufgabe zugrunde, ein effektiv arbeitendes Filtrierverfahren zur Aufbereitung von Wasser und eine dafür geeignete Filteranlage bereitzustellen.

Die Aufgabe wird durch das Verfahren gemäß Anspruch 1 und die Filtrationsanlage gemäß Anspruch 3 gelöst.

Durch die erfindungsgemäße Ausgestaltung ist es möglich, einzelne Filtrationsmodule während des weiterlaufenden Produktionsprozesses zu spülen, so dass nicht die gesamte Anlage stillgelegt werden muss. Darüber hinaus erfolgt das Rückspülen durch Filtrat aus dem laufenden Produktionsprozess, so dass eine Kontaminierung oder ein Keimwachstum während einer unvermeidlichen Lagerzeit nicht auftritt. Die Durchlaufleistung der anderen Gruppen wird erhöht, während eine Gruppe gespült wird, so dass die die Anlage verlassende Permeatmenge auch während des Spülens konstant bleibt. Die Menge des erzeugten Filtrats wird stromabwärts aller Gruppen für alle Gruppen gemeinsam geregelt. Auch die Menge der Rückspülflüssigkeit wird geregelt.

Von besonderem Vorteil ist die Tatsache, dass erfindungsgemäß eine CIP-Reinigung von der Rohwasserseite her erfolgen kann. Auf diese Weise kann wiederum jede Gruppe einzeln CIPgereinigt werden und eine Kontamination des ablaufenden Filtrats durch Chemikalien ist ausgeschlossen.

Die Umleitung des Filtrats in die zu spülende Gruppe an Filtrationsmodulen wird bevorzugt durch ein Regelventil in der Filtratleitung erreicht.

Unterstützt wird die Mengeneinstellung durch ein in der Abwasserleitung vorgesehenes Regelventil.

Zum Erhöhen der Filtratmenge während des Spülens einer Gruppe wird eine steuerbare Zulaufpumpe vorgesehen.

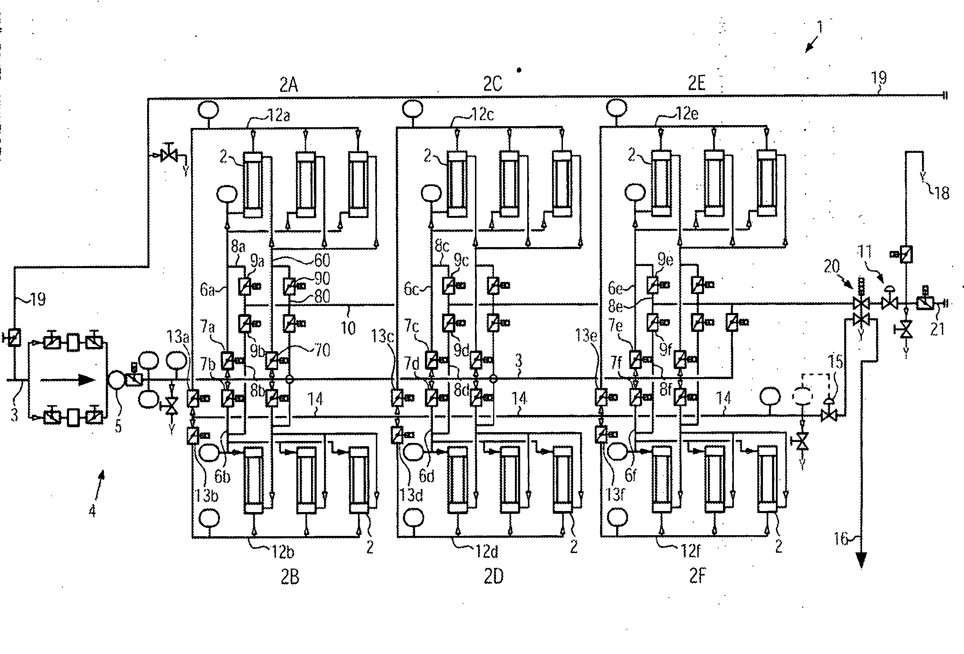

Ein Ausführungsbeispiel der Erfindung wird nachfolgend anhand der einzigen Zeichnung näher erläutert, die ein schematisches Schaltbild einer erfindungsgemäßen Filtrationsanlage zeigt.

Die dargestellte Filtrationsanlage 1 ist eine Ultrafiltrationsanlage und enthält eine Vielzahl von Filtrationsmodulen 2, die jeweils ein Bündel von Hohlfasern enthalten, durch deren Wandungen die Filtration erfolgt. Die Filtrationsmodule 2 sind in der gesamten Anlage im Wesentlichen identisch und erfüllen die gleiche Funktion. Die Filtrationsmodule 2 sind zu Gruppen 2A, 2B, 2C, 2D, 2E und 2F zusammengefasst. Jede der Gruppen 2A bis 2F enthält bevorzugt die gleiche Anzahl an Modulen 2, wobei im dargestellten Ausführungsbeispiel pro Gruppe 2A bis 2F jeweils drei Module vorgesehen sind. Die Anzahl kann jedoch je nach Bedarf variiert werden, im Extremfalle kann auch jede Gruppe nur ein Modul enthalten.

Den Filtrationsmodulen 2 wird über eine Leitung 3 Rohwasser zugeführt. Das Rohwasser durchläuft zunächst den üblichen Vorfilter-/Pumpen-Komplex 4, der einen üblichen Vorfilter und eine steuerbare Zulaufpumpe 5 enthält. Von dieser Rohwasserleitung 3 zweigt im Bereich der jeweiligen Gruppen jeweils eine Rohwasser-Abzweigleitung 6 ab, wobei die Abzweigleitung 6a der Gruppe 2A, 6b der Gruppe 2B, 6c der Gruppe 2C, 6d der Gruppe 2D, 6e der Gruppe 2E und 6f der Gruppe 2F zugeordnet ist. Jede dieser Abzweigleitungen 6 ist mit einer Absperreinrichtung 7 absperrbar, wobei die Absperreinrichtungen 7a, 7b, 7c, 7d, 7e und 7f jeweils derjenigen Gruppe 2A bis 2F zugeordnet sind, deren Buchstaben sie tragen.

Die Abzweigleitungen 6 versorgen über entsprechende Unterabzweigungen jedes Modul jeder Gruppe direkt mit dem in die Anlage eingespeisten Rohwasser. Im dargestellten Ausführungsbeispiel münden alle Abzweigleitungen in den unteren Bereich der aufrechtstehenden Hohlfaserbündel.

Aus dem unteren Bereich der Module 2 mündet jeweils eine Unterabzweigung einer Abwasserleitung 8 aus, die wiederum mit allen Modulen einer Gruppe verbunden ist und im dargestellten Ausführungsbeispiel zunächst identisch mit der Rohwasserabzweigung 6 ist. Wiederum werden die den entsprechenden Gruppen zugeordneten Abwasserleitungen 8 mit den gleichen Buchstaben gekennzeichnet wie die zugeordneten Gruppen. Die Abwasserleitungen 8 münden jeweils über entsprechende Absperreinrichtungen 9 in eine Abwasserleitung 10. Die Abwasserleitung 10 ist im dargestellten Ausführungsbeispiel für alle Gruppen 2A bis 2F gemeinsam und ist stromabwärts der letzten Gruppe mit einem Regelventil 11 versehen, durch das die Abflussmenge durch die Abwasserleitung 10 eingestellt werden kann.

Aus jedem der Module 2 jeder Gruppe 2A bis 2F mündet, wiederum über Unterabzweigungen, eine Filtratleitung 12, wobei die Filtratleitungen jeder Gruppe wieder deren Buchstaben tragen. Jede Filtratleitung 12a bis 12f ist jeweils über eine Absperreinrichtung 13 mit einer Filtratsammelleitung 14 verbunden, die stromabwärts der letzten Gruppe 2F mit einem Regelventil 15 versehen ist. Durch dieses Regelventil ist die Ablaufmenge des Filtrats einstellbar. Gegebenenfalls kann stromabwärts sowohl des Abwasser-Regelventils 11 als auch des Filtrat-Regelventils 15, beispielsweise in einer Ablaufleitung 16 zum Verbraucher, eine Absperreinrichtung vorgesehen sein.

Befinden sich alle Gruppen 2A bis 2F im Filterbetrieb, so wird jedem Modul 2 jeder Gruppe 2A bis 2F über die zugeordnete Rohwasserabzweigung 6 bei geöffnetem Ventil 7 Rohwasser zugeführt. Die zugeführte Rohwassermenge wird durch das Regelventil 15 eingestellt. Im bevorzugten Ausführungsbeispiel ist das Regelventil so eingestellt, dass eine Menge von 35 m³/h im Normalbetrieb durchläuft.

Das Rohwasser gelangt durch die Unterabzweigungen 6 in jedes Modul 2 und tritt durch die Wandungen der Hohlfaser hindurch. Das durchtretende, gefilterte Wasser verlässt die Module 2 über die Filtratleitungen 12 und die geöffneten Ventile 13, und gelangt in die Filtratsammelleitung 14, durch die das anfallende Filtrat aus allen Gruppen 2A bis 2F gesammelt wird und über das Regelventil 15 und die Ablaufleitung 16 abgeführt wird. Während des Filtrationsvorganges sind die Ventile 9 geschlossen.

Während des Reinigungsvorgangs einer Gruppe wird das dieser Gruppe zugeordnete Ventil 7 geschlossen und das Ventil 9 geöffnet. Die Zulaufpumpe wird auf einen erhöhten Fluss gebracht, der sich als ungeregelter Arbeitspunkt entsprechend der Pumpenkennlinien einstellt, indem mit Hilfe des Regelventils 15 ein Bypass über das zugeordnete, geöffnete Ventil 13 zu der aktuell nicht filtrierenden Gruppe geschaltet wird. Das vom Regelventil 15 zurückgedrängte, überschüssige Filtrat gelangt über die Filtratabzweigung 12 in umgekehrter Fließrichtung zur Fließrichtung beim Filtrieren in jedes gerade zu spülende Modul 2 und löst die an der Rohwasserseite der Hohlfaserwandung festsitzenden Stoffe und spült diese zunächst über den Anteil der Rohwasserabzweigung 6 und, da das Ventil 7 geschlossen ist und das Ventil 9 geöffnet wurde, über die Abwasserabzweigung 8 in die Abwassersammelleitung 10, wobei die abfließende Menge durch das Regelventil 11 geregelt wird. Jenseits des Regelventils 11 gelangt das Abwasser mit den weggespülten Verunreinigungen in einen Kanal 18 oder eine andere Einrichtung zur Entsorgung oder Weiterverwertung des Abwassers.

Während dieses Rückspülens filtrieren die anderen Stufen weiter, so dass wegen des erhöhten Zuflusses an Rohwasser keine Verringerung der Filtratmenge festzustellen ist.

Im bevorzugten Ausführungsbeispiel wird etwa 24 m³/h zum Spülen pro Gruppe bereitgestellt, so dass, um die Mengeneinstellung von 35 m³/h zu halten, 59 m³/h an Filtrat durch die verbleibenden fünf Gruppen erzeugt werden muss.

Für eine CIP-Reinigung mündet bei der erfindungsgemäßen Filtrationsanlage 1 eine Reinigungsleitung 19 (CIP-Vorlauf), die von einem üblichen Mischtank stammt, in dem die Reinigungsflüssigkeit mit Chemikalien versetzt wird, in die Rohwasserleitung 3, und zwar vor dem Vorfilter-/Pumpenkomplex 4. Der Reinigungstank kann ebenfalls mit Filtrat als Reinigungsflüssigkeit gespeist werden. Dann gelangt die Reinigungsflüssigkeit über die Rohwasserleitung 3 bei geöffneten Ventilen 7 und geschlossenen Ventilen 9 in die einzelnen Module 2 aller Gruppen 2A bis 2F und verlässt die Module als gereinigtes Filtrat über die Filtratabzweigungen 12 und die Filtratsammelleitung 14. Durch ein Doppelsitzventil 20 wird verhindert, dass Chemikalien aus der CIP-Reinigung in das Filtrat gelangen. Über 21 gelangt die Reinigungsflüssigkeit zum CIP-Rücklauf.

Als zusätzliche Möglichkeit ist in jeder Gruppe ein zweiter Rohwasser-/Abwasserkomplex vorgesehen, der eine der Rohwasserabzweigung 6 vergleichbare Leitung 60 mit dem Absperrventil 70 enthält, die jedoch, anders als die Rohwasserabzweigung 6, in den oberen Bereich der Module 2 mündet, d.h. in den Filtratbereich. Auch ist im zweiten Ast die Abwasserableitung 80 mit dem Ventil 90 vorgesehen, die in die Abwasser-Sammelleitung mündet. Dieser zweite Ast ist normalerweise stillgelegt, kann jedoch zum CIPen zur Unterstützung herangezogen werden.

## Patentansprüche

1. Verfahren zum Filtrieren von Wasser, insbesondere Ultrafiltrationsverfahren, mit einer Mehrzahl einzelner Filtrationsmodule (2), die durch eine steuerbare Zulaufpumpe (5) über jeweils wenigstens einen Rohwassereinlass (6) aus einer Rohwasserzufuhr (3) versorgt werden, und deren Filtrat über einen Filtratauslass (12) in eine Filtratsammelleitung (14) abgezogen wird, wobei die Filtrationsmodule (2) durch Rückspülen mit Filtrat gereinigt werden, wobei die Filtrationsmodule (2) in Gruppen (2A bis 2F) unterteilt werden, und beim Rückspülen jede Gruppe einzeln von der Rohwasserzufuhr (3) getrennt und mit dem während des Rückspülens von den restlichen Gruppen produzierten und aus der Filtratsammelleitung (14) rückgeführten Filtrat gespült wird, wobei die Menge des abfließenden Filtrats mit Hilfe eines Regelventils (15) in der Filtratsammelleitung stromabwärts aller Gruppen geregelt wird, wobei während des Rückspülens einer Gruppe die von den anderen Gruppen erzeugte Filtratmenge erhöht wird, indem die Zulaufpumpe (5) auf einen erhöhten Fluss gebracht wird und wobei die Menge der abfließenden Rückspülflüssigkeit über ein Regelventil (11) stromabwärts aller Gruppen geregelt wird.

2. Verfahren nach Anspruch 1, **dadurch gekennzeichnet, dass** eine CIP von der Rohwasserseite her erfolgt.

3. Filtrationsanlage, insbesondere Ultrafiltrationsanlage, mit einer Mehrzahl mit einer Rohwasserleitung (3) und einer steuerbaren Zulaufpumpe (5) verbundener einzelner Filtrationsmodule (2) mit jeweils wenigstens einem, mit der Rohwasserleitung (3) verbundenen Rohwassereinlass (6) und einem mit einer Filtratsammelleitung (14) verbundenen Filtratauslass (12) sowie eine Rückspüleinrichtung zum Rückspülen mit Filtrat aus der Filtratsammelleitung (14), wobei die Filtrationsmodule (2) in Gruppen (2A bis 2F) unterteilt sind, wobei jede Gruppe unabhängig von den anderen Gruppen von der Rohwasserleitung (3) trennbar und mit dem Filtrat aus der Filtratsammelleitung (14) rückspülbar ist, wobei die Filtratsammelleitung (14) stromabwärts aller Gruppen ein Regelventil (15) zum Erhöhen der Filtratleistung der gerade nicht rückgespülten Filtrationsmodule (2) über die Zulaufpumpe (5) aufweist, und wobei eine mit allen Modulen (2) verbundene Abwasserleitung (10) vorgesehen ist, in der ein Regelventil (11) zum RegeIn der Abwassermenge beim Rückspülen angeordnet ist.

4. Filtrationsanlage nach Anspruch 3, **dadurch gekennzeichnet, dass** ein CIP-Leitung (19) in die Rohwasserleitung (3), bevorzugt stromaufwärts eines Vorfilter-/ Pumpenkomplexes (4), einmündet.

## Claims

1. Method for filtering water, in particular an ultrafiltration method, with a plurality of individual filtration modules (2), each of which is supplied from an untreated water supply (3) via at least one untreated water inlet (6) by a controllable intake pump (5) and from which filtrate is removed via a filtrate outlet (12) into a filtrate collection line (14), wherein the filtration modules (2) are cleaned by means of backwashing with filtrate, wherein filtration modules (2) are divided into groups (2A to 2F), and during backwashing, each group is separated from the untreated water supply (3) individually and rinsed with the filtrate that is produced by the rest of the groups and fed back from the filtrate collection line (14), wherein the quantity of the outwardly flowing filtrate is regulated with a regulating valve (15) in the filtrate collection line downstream of all groups, wherein during the backwashing of one group, the filtrate quantity generated by the other groups is increased by increasing the flow level of the intake pump (5) and wherein the quantity of the outwardly flowing backwashing liquid is regulated with a regulating valve (11) downstream of all groups.

2. Method according to claim 1, **characterised in that** CIP takes place from the untreated water side.

3. Filtration system, particularly an ultrafiltration system, with a plurality of individual filtration modules (2) connected to an untreated water line (3) and a controllable intake pump (5), each with at least one untreated water inlet (6) connected to the untreated water line (3) and one filtrate outlet (12) connected to a filtrate collection line (14) as well as a backwashing device for backwashing with filtrate from the filtrate collection line (14), wherein the filtrate modules (2) are divided into groups (2A to 2F), wherein each group can be separated from the untreated water line (3) independently of the other groups and can be backwashed with the filtrate from the filtrate collection line (14), wherein the filtrate collection line (14) has a regulating valve (15) downstream of all groups for increasing with the intake pump (5) the filtrate production of the filtrate modules (2) currently not being backwashed, and wherein a wastewater disposal line (10) connected to all modules (2) is provided and a regulating valve (11) is arranged in the wastewater disposal line (10) for regulating the quantity of wastewater during backwashing.

4. Filtration system according to claim 3, **characterised in that** a CIP line (19) leads into the untreated water line (3), preferably upstream of a pre-filter / pump complex (4).

## Revendications

1. Procédé pour filtrer de l'eau, notamment procédé d'ultrafiltration, comprenant une pluralité de modules de filtration (2) individuels, qui sont alimentés, chacun respectivement par l'intermédiaire d'au moins une entrée d'eau brute (6), à partir d'une alimentation en eau brute (3), au moyen d'une pompe d'amenée (5) pouvant être commandée, et dont le filtrat est soutiré par une sortie de filtrat (12), dans une conduite de collecte de filtrat (14), procédé
d'après lequel les modules de filtration (2) sont nettoyés par rinçage à contre-courant avec du filtrat, d'après lequel les modules de filtration (2) sont subdivisés en groupes (2A à 2F), et lors du rinçage à contre-courant, chaque groupe est isolé individuellement de l'alimentation en eau brute (3), et est rincé avec le filtrat produit par les groupes restants pendant le rinçage à contre-courant et ramené à partir de la conduite de collecte de filtrat (14),
d'après lequel la quantité de filtrat s'écoulant en sortie est régulée à l'aide d'une vanne de régulation (15) dans la conduite de collecte de filtrat, en aval de tous les groupes,
d'après lequel pendant le rinçage à contre-courant d'un groupe, la quantité de filtrat produite par les autres groupes est augmentée en augmentant le débit de la pompe d'amenée (5),
et d'après lequel la quantité de liquide de rinçage à contre-courant s'écoulant en sortie est régulée par l'intermédiaire d'une vanne de régulation (11), en aval de tous les groupes.

2. Procédé selon la revendication 1, **caractérisé en ce qu'**un nettoyage en place CIP (cleaning in place) est effectué à partir du côté eau brute.

3. Installation de filtration, notamment installation d'ultrafiltration, comprenant une pluralité de modules de filtration (2) individuels, qui sont reliés à une conduite d'eau brute (3) et à une pompe d'amenée (5) pouvant être commandée, et comportent chacun au moins une entrée d'eau brute (6) reliée à la conduite d'eau brute (3) et une sortie de filtrat (12) reliée à une conduite de collecte de filtrat (14), ainsi qu'un dispositif de rinçage à contre-courant pour le rinçage à contre-courant avec du filtrat issu de la conduite de collecte de filtrat (14), installation dans laquelle les modules de filtration (2) sont subdivisés en groupes (2A à 2F),
dans laquelle chaque groupe peut être isolé de la conduite d'eau brute (3), indépendamment des autres groupes, et peut être rincé à contre-courant avec le filtrat en provenance de la conduite de collecte de filtrat (14),
dans laquelle la conduite de collecte de filtrat (14) présente, en aval de tous les groupes, une vanne de régulation (15) pour augmenter la capacité de filtration des modules de filtration (2), qui ne sont pas en train d'être rincés à contre-courant, par l'intermédiaire de la pompe d'amenée (5),
et dans laquelle il est prévu une conduite d'écoulement de sortie d'eaux usées (10), qui est reliée à tous les modules (2) et dans laquelle est agencée une vanne de régulation (11) pour réguler la quantité d'eaux usées lors du rinçage à contre-courant.

4. Installation de filtration selon la revendication 3, **caractérisée en ce qu'**une conduite de nettoyage en place CIP (cleaning in place) (19) débouche dans la conduite d'eau brute (3), de préférence en amont d'un complexe pré-filtre-pompe (4).
